# EUROPEAN PATENT SPECIFICATION

(11) **EP 4 197 160 B1**
(45) Date of publication and mention of the grant of the patent: **27.12.2023**
(21) Application number: 20757312.2
(22) Date of filing: 14.08.2020
(51) Int. Cl.: H04L 9/40

(54) **GENERATION OF A SECURITY CONFIGURATION PROFILE FOR A NETWORK ENTITY**
ERZEUGUNG EINES SICHERHEITSKONFIGURATIONSPROFILS FÜR EINE NETZWERKEINHEIT
GÉNÉRATION D'UN PROFIL DE CONFIGURATION DE SÉCURITÉ POUR UNE ENTITÉ DE RÉSEAU

(43) Date of publication of application: 21.06.2023
(73) Proprietor: Telefonaktiebolaget LM Ericsson (publ), 164 83 Stockholm (SE)
(72) Inventor: HAKALA, Harri, 20380 Turkku (FI); PUHAKAINEN, Anu, 02210 Espoo (FI); REIJONEN, Joel, 02230 Espoo (FI); POUTANEN, Tomi, 02620 Espoo (FI)
(74) Representative: Ericsson
(86) International application number: PCT/EP2020/072843
(87) International publication number: WO 2022/033699

(56) References cited:
- EP-A1- 3 525 399
- WO-A1-2019/228717
- CN-A- 108 900 527
- US-A1- 2019 052 676
- US-A1- 2019 258 807

## Description

### TECHNICAL FIELD

Embodiments presented herein relate to a method, a security configuration entity, a computer program, and a computer program product for generating a security configuration profile for a network entity.

### BACKGROUND

Security configuration for a server, network component, node or other type of network entity, has traditionally been implemented by a manual process, where the target network entity is first analyzed by a security expert. When characteristics of the network entity has been investigated by an expert, the expert uses industry best practice documents as references and based on those documents determines a desired security configuration profile for the network entity. Once the desired security configuration profile is identified, the expert develops configuration scripts for managing each of the identified security parameters in the security configuration profile. These scripts are then executed manually at one network entity at the time. Maintenance of the security configurations is based on regular manual snapshots and checks and fixing the deviations one by one based on the manual checks. The above disclosed manual process might result in that security configurations become inconsistent between similar types of network entities running different software versions.

Further issues with this manual process will be disclosed next.

Existing security configuration information and server characteristics need to be manually extracted and analyzed before being used.

There are many specifications that provide guidance on security frameworks, security controls, and command level details that need to be considered. For example, there might be specifications given by the International Organization for Standardization (ISO) the National Institute of Standards and Technology (NIST) and the Center for Internet security (CIS). Further, there might be vendor specific guidelines provide information on how to configure specific servers.

Security experts thus needs to spend considerable amount of time to collect and analyze background information, understand industry best practices, understand how to apply the collected information to a specific server and to develop configuration scripts server by server.

The above procedure for security configuration of network entities is time consuming, error prone, not scalable, and thus ineffective.

US 2019/258807 A1 discloses systems, methods and devices that automatically adjust an attribute or configuration (e.g., physical configuration) of a device based on a security vulnerability score. In an aspect, the disclosure includes sourcing module, determination module, scoring nodule, analysis module, and an adjustment module. In an aspect, the analysis module can be configured to compare the security vulnerability score to a lower security vulnerability score corresponding to another device that is different from the device, wherein the lower security vulnerability score represents a more secure device than the security vulnerability score. Furthermore, the adjustment module can be configured to automatically adjust the device attributes or the device components to match at least some another device attributes or another device components to decrease the security vulnerability score.

WO 2019/228717 A1 discloses network-based applications and virtualized components deployed according to a security analysis of the infrastructure to be used and application to be run on it. A specification of requirements is analyzed, together with potential devices and network nodes, to determine an appropriate level of security to be applied, and a deployment specification of application, services, security countermeasures, and networks is prepared that will satisfy the customer requirement and with known characteristics and vulnerabilities of the services. This analysis is used to generate a deployment specification, and finally the actual control of an orchestrator to deliver the service. The deployed system can be continually monitored to ensure that the service continues to operate within requirements. Should an incident such as a network attack or failure occur the system is re-analyzed against the original requirements and re-configured or repaired.

### SUMMARY

An object of embodiments herein is to alleviate or at least mitigate some of the issues disclosed above in order to provide efficient security configuration for a server, network component, node or other type of network entity.

According to a first aspect there is presented a method for generating a security configuration profile for a network entity. The method is performed by a security configuration entity. The method comprises generating the security configuration profile for the network entity based on network entity information, deployment information, and feedback information for a previously generated security configuration profile. The method comprises determining, based on calculating a risk score for the generated security configuration profile, whether the security configuration profile is to be provided towards the network entity or not. The method comprises generating feedback information for the security configuration profile based on the risk score, the network entity information, and the deployment information.

According to a second aspect there is presented a security configuration entity for generating a security configuration profile for a network entity. The security configuration entity comprises a profile generator and a security analyzer. The profile generator is configured to generate the security configuration profile for the network entity based on network entity information, deployment information, and feedback information, as received from the security analyzer, for a previously generated security configuration profile. The security analyzer is configured to determine, based on calculating a risk score for the generated security configuration profile, whether the security configuration profile is to be provided towards the network entity or not. The security analyzer is configured to generate feedback information for the security configuration profile based on the risk score, the network entity information, and the deployment information, and to provide the feedback information to the profile generator.

According to a third aspect there is presented a security configuration entity for generating a security configuration profile for a network entity. The security configuration entity comprises processing circuitry. The processing circuitry is configured to cause the security configuration entity to generate the security configuration profile for the network entity based on network entity information, deployment information, and feedback information for a previously generated security configuration profile. The processing circuitry is configured to cause the security configuration entity to determine, based on calculating a risk score for the generated security configuration profile, whether the security configuration profile is to be provided towards the network entity or not. The processing circuitry is configured to cause the security configuration entity to generate feedback information for the security configuration profile based on the risk score, the network entity information, and the deployment information.

According to a fourth aspect there is presented a computer program for generating a security configuration profile for a network entity, the computer program comprising computer program code which, when run on a security configuration entity, causes the security configuration entity to perform a method according to the first aspect.

According to a fifth aspect there is presented a computer program product comprising a computer program according to the fourth aspect and a computer readable storage medium on which the computer program is stored. The computer readable storage medium could be a non-transitory computer readable storage medium.

Advantageously, these aspects provide efficient security configuration for a server, network component, node or other type of network entity.

Advantageously, these aspects do not suffer from the issues disclosed above.

Advantageously, these aspects provide the ability to generate security configuration profiles for servers, services, network slices, etc. in an automated way that considers the individual requirements for each such network entity.

Advantageously, these aspects provide the ability to utilize machine learning in order to automate the generation of security configuration profiles.

Advantageously, these aspects provide the ability to automatically consider the needed network entity characteristics when generating the security configuration profiles.

Advantageously, these aspects provide the ability to adapt the security configuration profiles to the evolution of security best practices, to various server characteristics, to various industry knowledge of security risks, and experience based historical information or when changes occur in the network where the network entities are deployed.

Advantageously, these aspects provide the ability to automatically create executable configuration scripts for several types of network entities.

Advantageously, these aspects provide the ability to deduct what kind of configurations have led to exposure of vulnerabilities and failures in deployments which should be avoided.

Advantageously, these aspects provide the ability to automate configuration of multiple network entities.

Advantageously, these aspects provide the ability to remove security control that is no longer required in the security configuration profile.

Advantageously, these aspects ensure that all software components of the security configuration profiles are correctly configured.

Advantageously, these aspects speed up the introduction of new network entities to be managed based on the security intent.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a system according to embodiments;
Fig. 2 is a schematic diagram illustrating a security configuration entity according to an embodiment;
Figs. 3 and 7 are flowcharts of methods according to embodiments;
Fig. 4 is a schematic diagram illustrating a profile generator according to an embodiment;
Fig. 5 is a schematic diagram illustrating a general model for two-dimensional security configuration profiles according to an embodiment;
Fig. 6 is a schematic diagram illustrating a general model of three network slices, each having a security configuration profile, according to an embodiment;
Fig. 8 is a schematic diagram showing functional units of a security configuration entity according to an embodiment;
Fig. 9 is a schematic diagram showing functional modules of a security configuration entity according to an embodiment; and
Fig. 10 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

As noted above, current procedures for security configuration of network entities are time consuming, error prone, not scalable, and thus ineffective.

The embodiments disclosed herein therefore relate to mechanisms for generating a security configuration profile. In order to obtain such mechanisms there is provided a security configuration entity, a method performed by the security configuration entity, a computer program product comprising code, for example in the form of a computer program, that when run on a security configuration entity, causes the security configuration entity to perform the method.

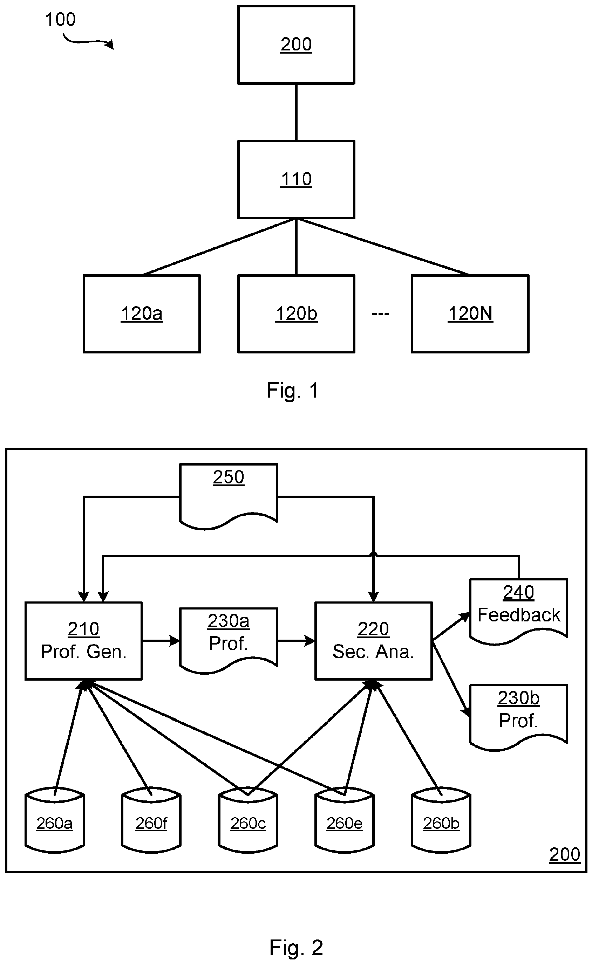

**Fig. 1** is a schematic diagram illustrating a system 100 where embodiments presented herein can be applied. The system 100 comprises a security configuration entity 200, a network and service orchestration system 110, and network entities 120a:120N. The security configuration entity 200 is configured to generate security configuration profiles for the network entities 120a:120N, and to provide such generated configuration profiles to the network and service orchestration system iio for further provisioning to the network entities 120a:120N. The security configuration profiles could then be used when the network entities 120a:120N are instantiated into their operating network environment.

In some non-limiting examples, each network entity 120a:120N is, or represents, any of: a network component, a network node, a server, a physical network function (PNF), a virtual network function (VNF), a containerized network function (CNF), a virtual security function (VSF), a physical security function (PSF), a network equipment (NE), a network slice. In turn, one or more network entities 120a:120N could be implemented, provided in, or utilized in, a communication system, such as telecommunication system. One or more network entities 120a:120N could be implemented, provided in, or utilized in (radio) access network node, a core network node, or a user equipment.

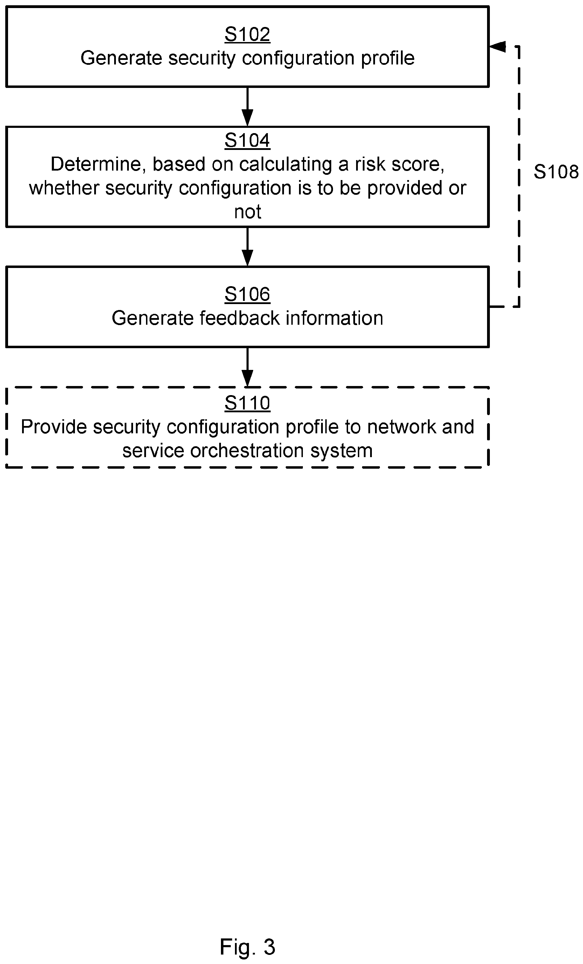

**Fig. 2** schematically illustrates the security configuration entity 200 according to an embodiment. As disclosed above, the security configuration entity 200 is configured to generate a security configuration profile 230a, 230b for a network entity 120a:120N, and to provide such generated configuration profiles 230a, 230b to the network and service orchestration system iio for further provisioning to the network entities 120a:120N. The security configuration entity 200 comprises a profile generator 210 configured to generate security configuration profiles 230a, 230b, and security analyzer 220 configured to determine a risks score and to generate feedback information 240 for generated security configuration profiles 230a, 230b. As will be further disclosed below, generation of the security configuration profiles 230a, 230b, determination of the risks score, and generation of the feedback information 240 is based on network entity information 250 as well as different types of information collected in databases 260a:260f. Operation of the security configuration entity 200 will be disclosed next with parallel reference being made to Fig. 3

**Fig. 3** is a flowchart illustrating embodiments of methods for generating a security configuration profile 230a, 230b, 620a, 620c, 620d for a network entity 120a:120N. The methods are performed by the security configuration entity 200. The methods are advantageously provided as computer programs 1020.

S102: The security configuration entity 200 generates the security configuration profile 230a, 230b for the network entity 120a:120N. The security configuration profile 230a, 230b is generated based on network entity information 250, deployment information, and feedback information 240 for a previously generated security configuration profile 230a, 230b. In some embodiments, step S102 is performed by the profile generator 210.

S104: The security configuration entity 200 determines, based on calculating a risk score for the generated security configuration profile 230a, 230b whether the security configuration profile 230a, 230b is to be provided towards the network entity 120a:120N or not. In some embodiments, step S104 is performed by the security analyzer 220.

S106: The security configuration entity 200 generates feedback information 240 for the security configuration profile 230a, 230b based on the risk score, the network entity information 250, and the deployment information. In some embodiments, step S106 is performed by the security analyzer 220.

A security configuration profile 230a, 230b for a network entity 120a:120N can thereby be generated in an automated way that considers the personalized requirements for each network entity 120a:120N. Moreover, the security configuration entity 200 is configured to adapt the security configuration profile 230a, 230b to the evolution of security best practices, to various operating systems, to various orchestration systems and to various application deployment tools.

Embodiments relating to further details of generating a security configuration profile 230a, 230b for a network entity 120a:120N as performed by the security configuration entity 200 will now be disclosed.

In some aspects, the method is iteratively performed (based on new feedback information being generated for each security configuration profile 230a, 230b being generated during each iteration) until an acceptable security configuration profile 230a, 230b is found. In particular, in some embodiments, the generating of the security configuration profile 230a, 230b in step S102, the determining in step S104, and the generating of the feedback information 240 in step s106 are iteratively repeated in a step S108 until the risk score for the security configuration profile 230a, 230b is lower than a threshold value.

In some aspects, once an acceptable security configuration profile 230a, 230 has been found, it is provided to a network and service orchestration system 110. That is, in some embodiments, the security configuration entity 200 is configured to perform (optional) step S110:
S110: The security configuration entity 200 provides the security configuration profile 230a, 230b, 620a, 620c, 620d to the network and service orchestration system 110 when the risk score is lower than a threshold value.

There could be different ways in which the security configuration profile 230a, 230b is provided (for example to the network and service orchestration system 110). In some embodiments, the security configuration profile 230a, 230b is provided as a template.

There could be different types of network entity information 250. In some embodiments, the network entity information 250 pertains to configuration of the network entity 120a:120N.

In this respect, the network entity information 250 might specify at least one of the following properties of the network entity 120a:120N: manufacturer, asset type and version, hardware and software types, operating system and specific version, all installed software (including applications and their versions and installed patches), asset name and IP address, asset criticality information, virtualized environment details, geographic location for deployment, services, file systems and registry details, approved users and a record of their logins, network interfaces, open ports.

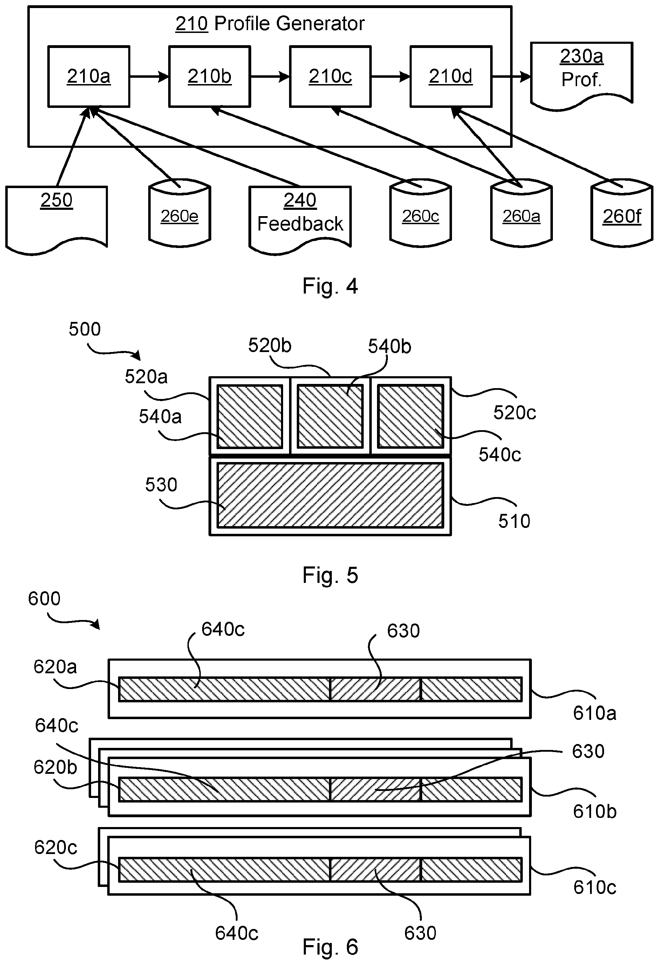

In some examples, the security configuration profile 230a, 230b has common part and a service specific part. In this respect, the network entity 120a:120N might be associated with at least one service 520a, 520b, 520c. In some embodiments, the network entity information 250 has a first part that is transparent to the at least one service 520a, 520b, 520c and a second part that is specific for each of the at least one service 520a, 520b, 520c. The security configuration profile 230a, 230b, 620a, 620c, 620d might then have a corresponding service transparent part 530 and a corresponding service specific part 540a, 540b, 540c that is specific for each of the at least one service 520a, 520b, 520c. Further aspects of this will be further disclosed below with references to Figs. 5 and 6.

There could be different types of deployment information. In some embodiments, the deployment information pertains to any of: security configuration information 260a, security risks assessment information 260b, deployed security configuration profiles historical information 260c, network environment information 260e, service specific security configuration information 260f.

The security configuration information 260a might relate to industry standard security specifications and best practices that defines recommended security properties to various asset types and specify at least one of the following: information defined by Security Program Frameworks (e.g. ISO 27001, NIST CSF), information in Security Control Catalogs (e.g. NIST SP800-53, ISO27001, ISO27002, ISO27011), information in NIST application container security guide (NIST SP800-190), information in Security Control Catalogs (e.g. CIS Benchmarks for most common OS, DB, Appl), information in 3GPP NESAS Security Assurance Specifications (SCAS), information in vendor specific hardening guidelines, policy catalog controls and execution scripts, information in Security Content Automation Protocol (SCAP).

The security risks assessment information 260b might relate to potential security risks based on industry knowledge or other security risk, vulnerability and threat sources and be obtained from at least one of the following: ENISA Threat Landscape Report, ENISA Threat Landscape for 5G networks, ENISA Cloud Computing Risk Assessment, EU Risk Assessment for 5G, 5G Americas Security Evaluation for 5G, 3GPP SCAS threats and critical assets in 3GPP network product classes, Contextualized threat intelligence, Vulnerability scanning results for different servers, External and internal vulnerability feeds, Context specific risk and vulnerability reports.

The deployed security configuration profiles historical information 260c might specify at least one of the following: historic security configuration profiles (for instance: deployed security configuration profiles not exposing vulnerabilities, deployed security configuration profiles having exposed vulnerabilities, unsuccessfully deployed security configuration profiles), and historic audit logs of security configuration profiles, where the audit logs indicate vulnerabilities of deployed security configuration profiles that have been previously exploited.

The network environment information 260e might be obtained in terms of notifications of changes in asset characteristics or network environment when the security configuration profiles are used in use in network environment and specify at least one of the following: changes in an asset configuration, new software installed, changes in virtualized environment, new vulnerability or threat detected, new IoC and vulnerability feed, vulnerability scanning results when security configuration profiles are in use.

The service specific security configuration information 260f might specify service specific security information related to at least one of the following services: 5G enhanced mobile broadband (eMBB), 5G massive machine type communications (mMTC), 5G ultra-reliable low latency communications (URLLC), mission critical services such as public safety services, energy cost of e.g. encryption per service and per different nodes, subscriber and service privacy protection requirements for identifiers and parameters used in the services.

In some embodiments, the deployment information based on which the security configuration profile 230a, 230b, 620a, 620c, 620d is generated pertains to the security configuration information 260a, the deployed security configuration profiles historical information 260c, the network environment information 260e, and the service specific security configuration information 260f.

One example of how the security configuration profile 230a can be generated in step S102 will now be disclosed with reference to Fig. 4. Fig. **4** schematically illustrates the profile generator 210 of Fig. 2 in more detail. In general terms, the profile generator 210 implements a pipeline procedure, as represented by blocks 210a:210d, for generating the security configuration profile 230a. Each of the blocks 210a:210d will now be described in terms.

In some embodiments, generating the security configuration profile 230a, 230b, 620a, 620c, 620d in step S102 comprises populating a template profile according to the network entity information 250 and then further populating the template profile according to the deployment information and the feedback information 240. The security configuration profile 230a, 230b, 620a, 620c, 620d is defined by the thus populated template profile.

Block 210a implements the procedure of populating a template profile according to the network entity information 250. In particular, block 210a takes as input the network entity information 250 and network environment information 260e. The outcome of block 210a is a template skeleton which corresponds to the template format and known information. Here the two enabling elements are the information about the template format, and assignment of the context-related information to the corresponding template. Here context-related information refers to the entity characteristics that describe custom characteristics, such as, the name of the node, IP-address, supported protocols, etc. The resulting security configuration profile as output from block 210a is illustrated in Table 1.

**Table 1: Example security configuration profile after block 210a**

| Security configuration profile | |
|---|---|
| Node | Xyz |
| Asset name | My node |
| OS | ? |
| Port | ? |

However, information from context-related information (or context configuration) may not be comprehensive enough to generate a complete security configuration profile 230a for the the network entity 120a:120N. This is in Table 1 indicated by question marks in the entries for OS and port.

Therefore, in some embodiments, when the template profile is further populated according to the deployment information, the template profile is first further populated according to the network environment information 260e, then further populated according to the deployed security configuration profiles historical information 260c, and then further populated according to the security configuration information 260a and the service specific security configuration information 260f.

The second block 210b composes successful experiences from the historic data in order to identify missing information. For instance, a similar network entity 120a:120N might have been deployed successfully with using OS: windows 10, ubuntu 18 and ubuntu 19. Even though historically successfully used security configuration profiles can be used to identify the missing information, multiple options, e.g. for OS, that have been proven successful during deployment might be identified, and the most secure options might be selected by any of the following blocks 210c, 210d. The resulting security configuration profile is illustrated in Table 2. As can be seen, the question marks from Table 1 have now been replaced by different options.

**Table 2: Example security configuration profile after block 210b**

| Security configuration profile | |
|---|---|
| Node | Xyz |
| Asset name | My node |
| OS | Windows10 or ubuntu18 or ubuntu19 |
| Port | 8080 or 8081 |

The third block 210c extracts information from files that depicts industry security standards and best practices. These files are received as text files, and the third block 210c identifies if a standard or a security practice can be applied for the targeted network entity 120a:120N. If a standard can be applied to the type of the target network entity 120a:120N, the third block 210c identifies which specifications are favorable to be employed for a security configuration profile. In the illustrated example, the third block 210c identifies that a feasible OS could be ubuntu18 or ubuntu19 but discards windows 10. Moreover, port 8082 is identified as a new option that could be used furthermore in the security configuration profile. The third block 210c also introduces new trends that cannot be found by using the second block 210b. In this way, the profile generator 210 stays updated. Moreover, the third block 210c also takes into account service-specific requirements, such as service-specific recommendation for encryption, etc, The resulting security configuration profile is illustrated in Table 3.

**Table 3: Example security configuration profile after block 210c**

| Security configuration profile | |
|---|---|
| Node | Xyz |
| Asset name | My node |
| OS | ubuntu18 or ubuntu19 |
| Port | 8080 or 8082 |
| Encryption | AES-192 |

The fourth block 210d has similar functionality as the third block 210c. In the fourth block 210d, the collection of potential security risks that could be applied for the targeted network entity 120a:120N are analyzed. Here potential security risks are based on industry knowledge or other security risks, vulnerability and threat sources. The fourth block 210d finds relevant possible security risks from given documentation, and identifies which specifications are coupled with potential security risks. For instance, if ubuntu18 has been related in many documented security risks, the fourth block 210d can give that OS a weight value that represents how good or bad the OS would be by considering known security risks. Moreover, the weighted good/bad value is furthermore used to select the proposed feature if there are multiple options. The resulting complete and final security configuration profile is illustrated in Table 4.

**Table 4: Example security configuration profile after block 210d**

| Security configuration profile | |
|---|---|
| Node | Xyz |
| Asset name | My node |
| OS | ubuntu18 |
| Port | 8082 |
| Encryption | AES-192 |

In view of the above, in some embodiments, further populating the template profile (as performed by the second block 210b, the third block 210c, and/or the fourt block 210d) involves any of: adding new configuration to the template profile, weighting alternative configurations already part of the template profile, making a selection among alternative configurations already part of the template profile.

After the fourth block 210d, the security configuration profile has achieved its final form, and the security configuration profile is ready to be analyzed by the security analyzer 220, where a risk score is calculated as in step S104. In this respect, in some embodiments, the deployment information based on which the risk score is calculated and on which the feedback information 240 is generated pertains to the security risks assessment information 260b, the deployed security configuration profiles, historical information 260c, and the network environment information 260e.

Further, in some aspects, classification can be used to determine the risk score. In particular, in some embodiments, the risk score is calculated based on a classification of the security configuration profile 230a, 230b, 620a, 620c, 620d. The classification is determined by assessing the security configuration profile 230a, 230b, 620a, 620c, 620d according to the security risks assessment information 260b, the deployed security configuration profiles historical information 260c, and the network environment information 260e.

As disclosed above, after the risk score has been calculated, feedback information 240 is generated and provided for use when a new security configuration profile 230a, 230b is to be generated. There could be different examples of how the feedback information 240 is provided. For example, the feedback information 240 could provided either as a numerical value or as binary indicator. That is, in some embodiments, the feedback information 240 either is identical to, or proportional to, the risk score itself, or is a binary indication of whether the risk score is lower than a threshold value or not. In further details, based on a list of potentially exposed security weaknesses, and their probabilities, the security analyzer 220 might send these results back as feedback information 240 to the profile generator 210 if the probability of exposing vulnerability is high (such as above 75%). This can be regarded as a feedback loop that guides the profile generator 210 in creation of proper security configuration profiles 230a, 230b in a predictive way. If the analyzed security configuration is predicted to expose vulnerabilities with rather low probability (such as below 75%), the security analyzer 220 might approve the generated security configuration profile 230a, 230b, and thus, facilitate provision of the security configuration profiles 230a, 230b towards the targeted network entity 120a:120N.

In some aspects, machine learning or the like is used by at least one of the profile generator 210 and the security analyzer 220. Details thereof will be disclosed next.

In particular, in some embodiments, calculating the risks score in step S104 and generating the feedback information 240 in step S106 involves application of at least one of a machine learning algorithm, a decision tree algorithm, a random forest algorithm that takes as input the security configuration profile 230a, 230b, 620a, 620c, 620d, the network entity information 250 and the deployment information, and produces as output the risk score and the feedback information 240. In this respect, machine learning or the like might be utilized in the security analyzer 220 to learn the causality between the generated security configuration profile 230a, 230b and known risk and threat intelligence. To be more precise, the security analyzer 220 might take advantage of supervised machine learning to learn the causality based on labelled data where the labelled data is composed from historic information, server characteristics and risk and threat intelligence. As an implementative approach, the security analyzer 220 might implement any of decision tree or forest-based classification algorithms where the algorithm is configured to conduct multi-class classification and map the classes, i.e. risks, threats or vulnerabilities, together with probabilities into the analyzed security configuration profile 230a, 230b.

In particular, in some embodiments, generating the security configuration profile 230a, 230b, 620a, 620c, 620d in step S102 involves application of at least one of a machine learning algorithm, a decision tree algorithm, and a random forest algorithm that takes as input the network entity information 250, the deployment information and the feedback information 240, and produces as output the security configuration profile 230a, 230b, 620a, 620c, 620d. In this respect, machine learning or the like might be utilized in the profile generator 210 to automate the generation of the security configuration profiles 230a, 230b. With machine learning, the profile generator 210 can learn how to generate security configuration profiles 230a, 230b by utilizing historical information, and to adapt these configuration profiles 230a, 230b based on evolving security best practices, and also, based on server characteristics and feedback information. Moreover, the profile generator 210 might considers best security practices, server characteristics and feedback information 240 to bias the generation of new security configuration profiles 230a, 230b. With bias is referred to additional parameters that are fed to the machine learning model, where the model favors prospect configuration profiles 230a, 230b that are in line with the parameters. In some embodiments, the machine learning algorithm, the decision tree algorithm, and/or the random forest algorithm updates the template profile based on the deployment information and the feedback information 240. As an example, if the network entity 120a:120N has a Linux-based operating system, the profile generator 210 might favor security configuration profiles 230a, 230b that are, firstly, applicable to Linux-based systems, and also, security configuration profiles 230a, 230b that have been proven to be the most successful for Linux-based systems in the past.

As noted above the security configuration profile 230a, 230b might have common part and a service specific part. Two examples relating thereto will now be disclosed with references to Fig. 5 and Fig. 6.

The first example concerns a scenario where a security configuration profile is to be generated for a network entity 120a:120N running a host Operating System (OS) and applications in the hosted virtualized architecture, where the hos OS is common for all the applications, and where each application represents a service. Fig. **5** schematically illustrates a general model 500 for the thus two-dimensional security configuration profiles applied to the context of a common setup consisting of a host OS and virtualized applications running on top of the host OS, where the security configuration profile has a service transparent part 530 and three service specific parts 540a, 540b, 540c. In further detail, according to the herein disclosed embodiments a basic day-0 security configuration profile for the common host operating system in a virtualized deployment and individual application specific configuration profiles for the applications running in virtual machines or containers on top of the host OS are generated. In this example the profile generator 110 is used to generate a common security configuration profile (as represented by the service transparent part 530) for the host OS and a respective security configuration profile (as represented by the service specific parts 540a, 540b, 540c) for each of the virtualized applications.

For simplicity reasons but without loss of generality, the security configuration profiles in this example assume only a common set of OS level security control and one application level security control. These requirements can easily be scaled and extended to address any number of security requirements and levels for any specific host OS and applications. As an illustrative example, the common security configuration profile for the host OS might represent a management plane security configuration for the OS level pertaining a password policy configuration (e.g. defining password length, password maximum age in days, password complexity, no user identity allowed in password, etc.), a SSH policy (e.g. defining maximum SSH authentication tries, SSH idle Timeout interval, disabling direct SSH root login, etc.), a SNMP secure configuration, audit login configuration (e.g. events where changes to network environment files, system calls, access control or user settings are being made are audited), and/or access control configuration (e.g. defining maximum allowed number of invalid logon attempts, interval for consecutive invalid logon attempts, lockout duration, etc.).

As an illustrative example, the first application might be responsible for handling sensitive privacy data and thus needs a security configuration profile pertaining to security requirements for protecting personally identifiable information. As an illustrative example, the second application might be responsible for controlling the network traffic and thus needs a security configuration profile pertaining to security settings for protecting data packages in transit. As an illustrative example, the third application might be responsible for controlling billing data and needs a security configuration profile pertaining to security configuration for the application layer.

As above, after the profile generator 210 has been applied to generate the security configuration profiles (both the service transparent part 530 and the service specific parts 540a, 540b, 540c), the security analyzer 220 is applied to calculate a risk score for the generated security configuration profiles and to generate feedback information 240 for the security configuration profile based on the risk score to enable the profile generator 210 to refine the security configuration profiles.

As an illustrative example, the service specific part 540a of the security configuration profile for the first application logs all actions to related privacy information, encrypts the privacy data at rest with AES-128, and encrypts the privacy data in transit with TLS. As an illustrative example, the service specific part 540b of the security configuration profile for the second application implements data encryption using AES-192 and message authentication code (MAC) algorithms for data integrity protection using HMAC-SHA256. As an illustrative example, the service specific part 540c of the security configuration profile for the third application performs two factor authentication for logging the application part and billing data at rest encryption with AES-192 and data integrity protection using HMAC-SHA3.

The second example concerns a scenario where a security configuration profile is to be generated for network entities 120a:120N in the form of network slices. This example is applicable in cellular communication networks such as the fifth (5G) generation telecommunication system as specified by the third generation partnership project (3GPP).

In general terms, service specific security information for Network Functions or servers can be categorized based on some main security principles, e.g. security configuration details for confidentiality and integrity protection, authentication, availability and isolation. Further, at least some of the following security parameters might be considered for service-specific security configurations per each network slice.

Confidentiality ensures that the content of packets/traffic of a network slice is not observable from outside the network slice. Examples of encryption algorithms that can be used for confidentiality protection of network slices are provided by the Advanced Encryption Standard (AES). Depending on the confidentiality requirement for a network slice, different strength of AES can be used, for instance 128, 192, or 256-bit ciphers.

Integrity ensures that the content of packets/traffic of a network slice is not modified (e.g. by means of tampering or replacement of data) from outside the network slice without notice. Examples of integrity algorithms that can be used for integrity protection of network slices are provided by Secure Hash Algorithms (SHA). Depending on the integrity requirement for a network slice, different SHA functions can be used, for instance SHA-2 or SHA-3.

Authentication ensures that only authorized persons, accounts and elements can interact with a network slice. For instance, if network slice specific authentication is not performed, unauthorized User Equipment (UE) might access the network slice. Thus, an unauthorized UE might consume resources of the network slice and might cause denial of service to legitimate UEs. AUE might therefore need additional secondary authentication towards an authentication, authorization, and accounting (AAA) server hosted by the home public land mobile network (H-PLMN) operator or a trusted third party in order to access the specific network slice.

Availability ensures that the network slice remains accessible all the time for authorized users. The network slices should be accessible as long as the contracted infrastructure resources are not exceeded.

Isolation between network slices ensures that information transferred in each network slice is not shared among other network slices. Isolation could be regarded from two perspectives. Operational isolation implies that vertical users could have independent monitoring, control, configuration, or even full operation capability of the network slice. Network level isolation implies that vertical users do not share network function or resources with other users. Network level isolation also has different sub-categories, for instance, shared radio access network (RAN) but isolated core network, or isolated RAN as well as core network, etc.

Network slicing security can be implemented at different levels and dimensions, e.g. from communication method (e.g. authentication) to isolation method (e.g. soft isolation based on virtualization regarding to virtual compute, storage and network resources or hard isolation based on physical entity).

**Fig. 6** schematically illustrates a general model 600 of three network slices 610a, 610b, 610c. In the illustrative examples of Fig. 6, there are three instances of network slice 610b. Each network slice 610a:610c is associated with a security configuration template 620a, 620b, 620c. Each security configuration profile has a service transparent part 630 and a service specific part 640a, 640b, 640c. For illustration, the first network slice 610a is associated with a mobile broadband service, the second network slice 610b is associated with a public transport service, and the third network slice 610c is associated with a public safety service. In this example the profile generator 110 is used to generate a security configuration profile that has a part 640 that is common for all network slices 610a:610c and parts 640a:640c that are specific for each network slice.

For simplicity reasons the service specific security settings in this example assumes only confidentiality and integrity related parameters as input requirements for the network slice specific parts of the security configuration profile. However, these input requirements can easily be scaled and extended to address any number of security requirements for any specific network slice. Assume for illustrative purposes that the profile generator 210 generates security configuration profiles where for all network slices AES-128 encryption is provided for confidentiality protection.

As above, after the profile generator 210 has been applied to generate the security configuration profiles (both the service transparent part 630 and the network slice specific parts 640a, 640b, 640c), the security analyzer 220 is applied to calculate a risk score for the generated security configuration profiles and to generate feedback information 240 for the security configuration profile based on the risk score to enable the profile generator 210 to refine the security configuration profiles.

As an illustrative example, service specific risks might be evaluated by the security analyzer 220 and used to finetune and re-iterate generation of security configuration profiles. As an illustrative example, the security analyzer 220 might identify increased information leakage risks for network slice of the public safety service due to its usage for mission critical service. Therefore, the service specific part of the security configuration profile for this network slice might be enhanced to include stronger encryption and integrity protection. As a result, it is determined that AES-192 without integrity protection is to be used for the network slice associated with the mobile broadband service and the network slice associated with the public transport slice whereas AES-192 used with integrity protection with SHA-2 is to be used for the network slice associated with the public safety service.

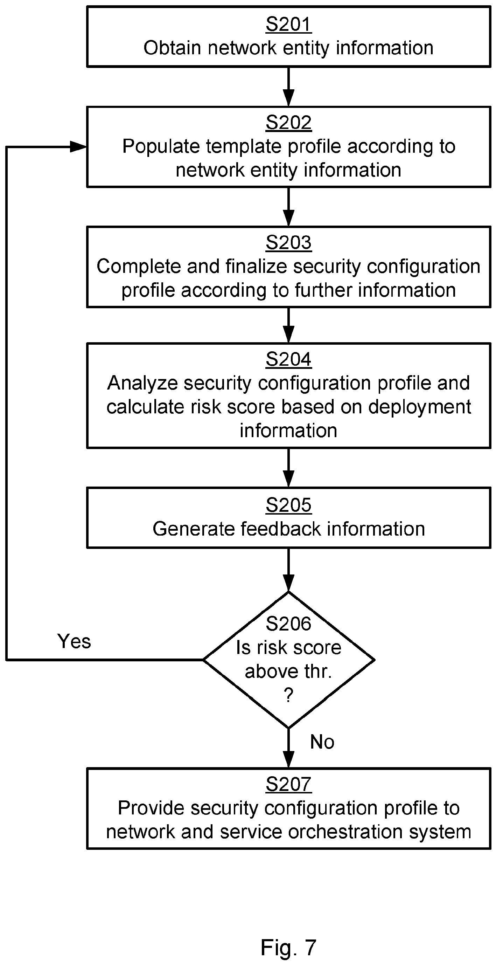

Reference is now made to the flowchart of Fig. **7** for a method for generating a security configuration profile 230a, 230b, 620a, 620c, 620d for a network entity 120a:120N in accordance with at least some of the above disclosed embodiments.

S201: Network entity information 250 for the network entity 120a:120N is obtained.

S202: Block 210a is utilized to populate a template profile according to the network entity information 250 and any available feedback information 240.

S203: Blocks 21b:210d are utilized to complete and finalize the security configuration profile according to successful experiences from the historic data (as utilized by block 210b), information from files that depicts industry security standards and best practices (as utilized by block 210c), and relevant possible security risks from given documentation and identification of which specifications are coupled with potential security risks (as utilized by block 210d).

S204: The security configuration profile is analyzed by the security analyzer 220, where a risk score is calculated based on deployment information.

S205: The security analyzer 220 generates feedback information 240.

The deployment information based on which the risk score is calculated and on which the feedback information 240 is generated pertains to the security risks assessment information 260b, the deployed security configuration profiles, historical information 260c, and the network environment information 260e

S206: It is checked if the risk score is above a threshold value. If yes, step S202 is entered again and a new security configuration profile is generated. If no, step S207 is entered.

S207: The security configuration profile is provided to the network and service orchestration system 110.

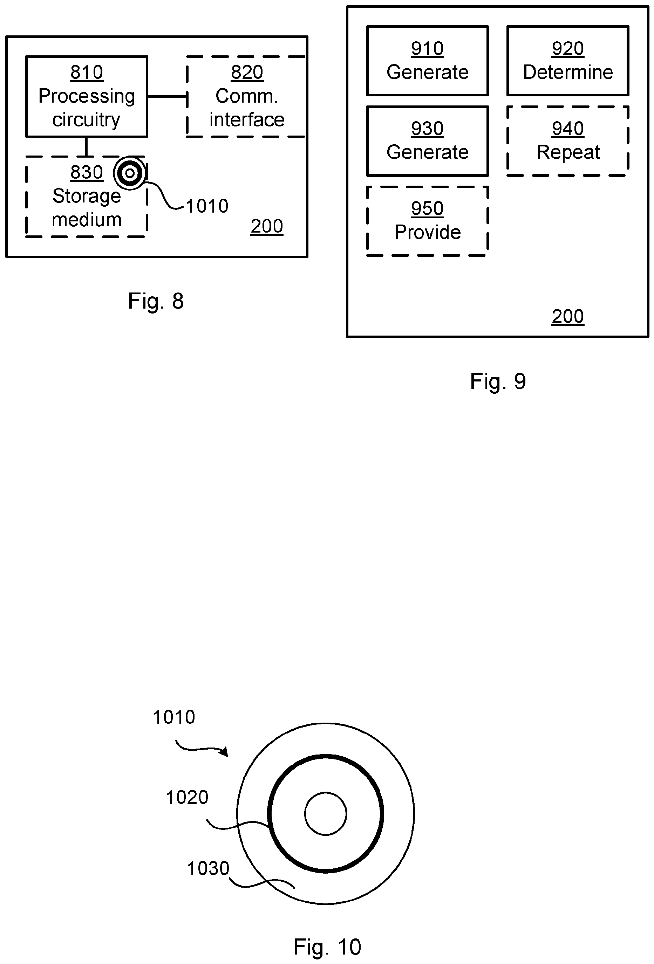

Fig. 8 schematically illustrates, in terms of a number of functional units, the components of a security configuration entity 200 according to an embodiment. Processing circuitry 810 is provided using any combination of one or more of a suitable central processing unit (CPU), multiprocessor, microcontroller, digital signal processor (DSP), etc., capable of executing software instructions stored in a computer program product 1010 (as in Fig. 10), e.g. in the form of a storage medium 830. The processing circuitry 810 may further be provided as at least one application specific integrated circuit (ASIC), or field programmable gate array (FPGA).

Particularly, the processing circuitry 810 is configured to cause the security configuration entity 200 to perform a set of operations, or steps, as disclosed above. For example, the storage medium 830 may store the set of operations, and the processing circuitry 810 may be configured to retrieve the set of operations from the storage medium 830 to cause the security configuration entity 200 to perform the set of operations. The set of operations may be provided as a set of executable instructions.

Thus the processing circuitry 810 is thereby arranged to execute methods as herein disclosed. The storage medium 830 may also comprise persistent storage, which, for example, can be any single one or combination of magnetic memory, optical memory, solid state memory or even remotely mounted memory. The security configuration entity 200 may further comprise a communications interface 820 at least configured for communications with other entities, functions, nodes, and devices, for collecting information to its databases 260a:260f, for obtaining network entity information 250, and for providing security configuration profiles 230a, 230b, 620a, 620c, 620d to a network and service orchestration system 110. As such the communications interface 820 may comprise one or more transmitters and receivers, comprising analogue and digital components. The processing circuitry 810 controls the general operation of the security configuration entity 200 e.g. by sending data and control signals to the communications interface 820 and the storage medium 830, by receiving data and reports from the communications interface 820, and by retrieving data and instructions from the storage medium 830. Other components, as well as the related functionality, of the security configuration entity 200 are omitted in order not to obscure the concepts presented herein.

**Fig. 9** schematically illustrates, in terms of a number of functional modules, the components of a security configuration entity 200 according to an embodiment. The security configuration entity 200 of Fig. 9 comprises a number of functional modules; a generate module 910 configured to perform step S102, a determine module 920 configured to perform step S104, and a generate module 930 configured to perform step S106. The security configuration entity 200 of Fig. 9 may further comprise a number of optional functional modules, such as any of a repeat module 940 configured to perform step S108, and a provide module 950 configured to perform step S110. In general terms, each functional module 910-950 may in one embodiment be implemented only in hardware and in another embodiment with the help of software, i.e., the latter embodiment having computer program instructions stored on the storage medium 830 which when run on the processing circuitry makes the security configuration entity 200 perform the corresponding steps mentioned above in conjunction with Fig 9. It should also be mentioned that even though the modules correspond to parts of a computer program, they do not need to be separate modules therein, but the way in which they are implemented in software is dependent on the programming language used. Preferably, one or more or all functional modules 910-950 may be implemented by the processing circuitry 810, possibly in cooperation with the communications interface 820 and/or the storage medium 830. The processing circuitry 810 may thus be configured to from the storage medium 830 fetch instructions as provided by a functional module 910-950 and to execute these instructions, thereby performing any steps as disclosed herein.

A first portion of the instructions performed by the security configuration entity 200 may be executed in a first device, and a second portion of the of the instructions performed by the security configuration entity 200 may be executed in a second device; the herein disclosed embodiments are not limited to any particular number of devices on which the instructions performed by the security configuration entity 200 may be executed. Hence, the methods according to the herein disclosed embodiments are suitable to be performed by a security configuration entity 200 residing in a cloud computational environment. Therefore, although a single processing circuitry 810 is illustrated in Fig. 8 the processing circuitry 810 may be distributed among a plurality of devices, or nodes. The same applies to the functional modules 910-950 of Fig. 9 and the computer program 1020 of Fig. 10.

**Fig. 10** shows one example of a computer program product 1010 comprising computer readable storage medium 1030. On this computer readable storage medium 1030, a computer program 1020 can be stored, which computer program 1020 can cause the processing circuitry 810 and thereto operatively coupled entities and devices, such as the communications interface 820 and the storage medium 830, to execute methods according to embodiments described herein. The computer program 1020 and/or computer program product 1010 may thus provide means for performing any steps as herein disclosed.

In the example of Fig. 10, the computer program product 1010 is illustrated as an optical disc, such as a CD (compact disc) or a DVD (digital versatile disc) or a Blu-Ray disc. The computer program product 1010 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1020 is here schematically shown as a track on the depicted optical disk, the computer program 1020 can be stored in any way which is suitable for the computer program product 1010.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for generating a security configuration profile (230a, 230b, 620a, 620c, 620d) for a network entity (120a:120N), the method being performed by a security configuration entity (200), the method comprising:
generating (S102) the security configuration profile (230a, 230b, 620a, 620c, 620d) for the network entity (120a:120N) based on network entity information (250), deployment information, and feedback information (240) for a previously generated security configuration profile (230a, 230b, 620a, 620c, 620d) wherein generating the security configuration profile (230a, 230b, 620a, 620c, 620d) involves application of at least one of a machine learning algorithm, a decision tree algorithm, and a random forest algorithm that takes as input the network entity information (250), the deployment information and the feedback information (240), and produces as output the security configuration profile (230a, 230b, 620a, 620c, 620d);
determining (S104), based on calculating a risk score for the generated security configuration profile (230a, 230b, 620a, 620c, 620d), whether the security configuration profile (230a, 230b, 620a, 620c, 620d) is to be provided towards the network entity (120a:120N) or not; and
generating (S106) feedback information (240) for the security configuration profile (230a, 230b, 620a, 620c, 620d) based on the risk score, the network entity information (250), and the deployment information.

2. The method according to claim 1, wherein said generating (S102) the security configuration profile (230a, 230b, 620a, 620c, 620d), said determining (S104), and said generating (S106) feedback information (240) are iteratively repeated (S108) until the risk score for the security configuration profile (230a, 230b, 620a, 620c, 620d) is lower than a threshold value.

3. The method according to claim 1 or 2, further comprising:
providing (S110) the security configuration profile (230a, 230b, 620a, 620c, 620d) to a network and service orchestration system (110) when the risk score is lower than a threshold value.

4. The method according to any of the preceding claims, wherein the security configuration profile (230a, 230b, 620a, 620c, 620d) is provided as a template.

5. The method according to any of the preceding claims, wherein the network entity information (250) pertains to configuration of the network entity (120a:120N).

6. The method according to any of the preceding claims, wherein the network entity (120a:120N) is associated with at least one service (520a, 520b, 520c), wherein the network entity information (250) has a first part that is transparent to the at least one service (520a, 520b, 520c) and a second part that is specific for each of the at least one service (520a, 520b, 520c), and wherein the security configuration profile (230a, 230b, 620a, 620c, 620d) has a corresponding service transparent part (530) and a corresponding service specific part (540a, 540b, 540c) that is specific for each of the at least one service (520a, 520b, 520c).

7. The method according to any of the preceding claims, wherein the deployment information pertains to any of: security configuration information (260a), security risks assessment information (260b), deployed security configuration profiles historical information (260c), network environment information (260e), service specific security configuration information (260f).

8. The method according to any of the preceding claims, wherein generating the security configuration profile (230a, 230b, 620a, 620c, 620d) comprises populating a template profile according to the network entity information (250) and then further populating the template profile according to the deployment information and the feedback information (240), and wherein the security configuration profile (230a, 230b, 620a, 620c, 620d) is defined by the thus populated template profile.

9. The method according to any of the preceding claims, wherein the risk score is calculated based on a classification of the security configuration profile (230a, 230b, 620a, 620c, 620d), wherein the classification is determined by assessing the security configuration profile (230a, 230b, 620a, 620c, 620d) according to the security risks assessment information (260b), the deployed security configuration profiles historical information (260c), and the network environment information (260e).

10. The method according to any of the preceding claims, wherein the feedback information (240) either is identical to, or proportional to, the risk score itself, or is a binary indication of whether the risk score is lower than a threshold value or not.

11. The method according to any of the preceding claims, wherein calculating the risks score and generating the feedback information (240) involves application of at least one of a machine learning algorithm, a decision tree algorithm, a random forest algorithm that takes as input the security configuration profile (230a, 230b, 620a, 620c, 620d), the network entity information (250) and the deployment information, and produces as output the risk score and the feedback information (240).

12. The method according to any of the preceding claims, wherein the network entity (120a:120N) is any of: a network component, a network node, a server, a physical network function, PNF, a virtual network function, VNF, a containerized network function, CNF, a virtual security function, VSF, a physical security function, PSF, a network equipment, NE, a network slice.

13. A security configuration entity (200) for generating a security configuration profile (230a, 230b, 620a, 620c, 620d) for a network entity (120a:120N), the security configuration entity (200) comprising processing circuitry (810), the processing circuitry being configured to cause the security configuration entity (200) to:
generate the security configuration profile (230a, 230b, 620a, 620c, 620d) for the network entity (120a:120N) based on network entity information (250), deployment information, and feedback information (240) for a previously generated security configuration profile (230a, 230b, 620a, 620c, 620d), wherein generating the security configuration profile (230a, 230b, 620a, 620c, 620d) involves application of at least one of a machine learning algorithm, a decision tree algorithm, and a random forest algorithm that takes as input the network entity information (250), the deployment information and the feedback information (240), and produces as output the security configuration profile (230a, 230b, 620a, 620c, 620d);
determine, based on calculating a risk score for the generated security configuration profile (230a, 230b, 620a, 620c, 620d), whether the security configuration profile (230a, 230b, 620a, 620c, 620d) is to be provided towards the network entity (120a:120N) or not; and
generate feedback information (240) for the security configuration profile (230a, 230b, 620a, 620c, 620d) based on the risk score, the network entity information (250), and the deployment information.

14. The security configuration entity (200) according to claim 13, further being configured to perform the method according to any of claims 2 to 12.

15. A computer program (1020) for generating a security configuration profile (230a, 230b, 620a, 620c, 620d) for a network entity (120a:120N), the computer program comprising computer code which, when run on processing circuitry (810) of a security configuration entity (200), causes the security configuration entity (200) to:
generate (S102) the security configuration profile (230a, 230b, 620a, 620c, 620d) for the network entity (120a:120N) based on network entity information (250), deployment information, and feedback information (240) for a previously generated security configuration profile (230a, 230b, 620a, 620c, 620d), wherein generating the security configuration profile (230a, 230b, 620a, 620c, 620d) involves application of at least one of a machine learning algorithm, a decision tree algorithm, and a random forest algorithm that takes as input the network entity information (250), the deployment information and the feedback information (240), and produces as output the security configuration profile (230a, 230b, 620a, 620c, 620d);
determine (S104), based on calculating a risk score for the generated security configuration profile (230a, 230b, 620a, 620c, 620d), whether the security configuration profile (230a, 230b, 620a, 620c, 620d) is to be provided towards the network entity (120a:120N) or not; and
generate (S106) feedback information (240) for the security configuration profile (230a, 230b, 620a, 620c, 620d) based on the risk score, the network entity information (250), and the deployment information.

## Patentansprüche

1. Verfahren zur Erstellung eines Sicherheitskonfigurationsprofils (230a, 230b, 620a, 620c, 620d) für eine Netzwerkentität (120a:120N), wobei das Verfahren von einer Sicherheitskonfigurationsentität (200) durchgeführt wird und das Verfahren umfasst:
Erstellen (S102) des Sicherheitskonfigurationsprofils (230a, 230b, 620a, 620c, 620d) für die Netzwerkentität (120a:120N) basierend auf Netzwerkentitätsinformationen (250), Bereitstellungsinformationen und Rückmeldungsinformationen (240) für ein früher erstelltes Sicherheitskonfigurationsprofil (230a, 230b, 620a, 620c, 620d), wobei das Erstellen des Sicherheitskonfigurationsprofils (230a, 230b, 620a, 620c, 620d) die Anwendung mindestens eines von einem Algorithmus für maschinelles Lernen, einem Entscheidungsbaumalgorithmus und einem Random-Forest-Algorithmus umfasst, der als Eingabe die Netzwerkentitätsinformationen (250), die Bereitstellungsinformationen und die Rückmeldungsinformationen (240) nimmt und als Ausgabe das Sicherheitskonfigurationsprofil (230a, 230b, 620a, 620c, 620d) erzeugt;
Bestimmen (S104) basierend auf einer Berechnung einer Risikobewertung für das erstellte Sicherheitskonfigurationsprofil (230a, 230b, 620a, 620c, 620d), ob das Sicherheitskonfigurationsprofil (230a, 230b, 620a, 620c, 620d) für die Netzwerkentität (120a:120N) bereitgestellt werden soll oder nicht; und
Erstellen (S106) von Rückmeldungsinformationen (240) für das Sicherheitskonfigurationsprofil (230a, 230b, 620a, 620c, 620d) basierend auf der Risikobewertung, den Netzwerkentitätsinformationen (250) und den Bereitstellungsinformationen.

2. Verfahren nach Anspruch 1, wobei das Erstellen (S102) des Sicherheitskonfigurationsprofils (230a, 230b, 620a, 620c, 620d), das Bestimmen (S104) und das Erstellen (S106) von Rückmeldungsinformationen (240) iterativ wiederholt werden (S108), bis die Risikobewertung für das Sicherheitskonfigurationsprofil (230a, 230b, 620a, 620c, 620d) niedriger als ein Schwellenwert ist.

3. Verfahren nach Anspruch 1 oder 2, ferner umfassend:
Bereitstellen (S110) des Sicherheitskonfigurationsprofils (230a, 230b, 620a, 620c, 620d) für ein Netzwerk- und Dienst-Orchestrierungssystem (110), wenn die Risikobewertung niedriger als ein Schwellenwert ist.

4. Verfahren nach einem der vorhergehenden Ansprüche, wobei das Sicherheitskonfigurationsprofil (230a, 230b, 620a, 620c, 620d) als Vorlage bereitgestellt wird.

5. Verfahren nach einem der vorhergehenden Ansprüche, wobei die Netzwerkentitätsinformationen (250) die Konfiguration der Netzwerkentität (120a:120N) betreffen.

6. Verfahren nach einem der vorhergehenden Ansprüche, wobei die Netzwerkentität (120a:120N) mit mindestens einem Dienst (520a, 520b, 520c) assoziiert ist, wobei die Netzwerkentitätsinformationen (250) einen ersten Teil, der transparent für den mindestens einen Dienst (520a, 520b, 520c) ist, und zweiten Teil aufweisen, der spezifisch für jeden des mindestens einen Dienstes (520a, 520b, 520c) ist, und wobei das Sicherheitskonfigurationsprofil (230a, 230b, 620a, 620c, 620d) einen entsprechenden diensttransparenten Teil (530) und einen entsprechenden dienstspezifischen Teil (540a, 540b, 540c) aufweist, der spezifisch für jeden des mindestens einen Dienstes (520a, 520b, 520c) ist.

7. Verfahren nach einem der vorhergehenden Ansprüche, wobei die Bereitstellungsinformationen eines von Folgendem betreffen: Sicherheitskonfigurationsinformationen (260a), Sicherheitsrisikobeurteilungsinformationen (260b), Verlaufsinformationen hinsichtlich bereitgestellter Sicherheitskonfigurationsprofile (260c), Netzwerkumgebungsinformationen (260e), dienstspezifische Sicherheitskonfigurationsinformationen (260f).

8. Verfahren nach einem der vorhergehenden Ansprüche, wobei das Erstellen des Sicherheitskonfigurationsprofils (230a, 230b, 620a, 620c, 620d) ein Befüllen eines Vorlagenprofils gemäß den Netzwerkentitätsinformation (250) und anschließendes weiteres Befüllen des Vorlagenprofils gemäß den Bereitstellungsinformationen und den Rückmeldungsinformationen (240) umfasst, und wobei das Sicherheitskonfigurationsprofil (230a, 230b, 620a, 620c, 620d) durch das so befüllte Vorlagenprofil definiert wird.

9. Verfahren nach einem der vorhergehenden Ansprüche, wobei die Risikobewertung basierend auf einer Klassifikation des Sicherheitskonfigurationsprofils (230a, 230b, 620a, 620c, 620d) berechnet wird, wobei die Klassifikation durch Beurteilen des Sicherheitskonfigurationsprofils (230a, 230b, 620a, 620c, 620d) gemäß den Sicherheitskonfigurationsbeurteilungsinformationen (260b), den Verlaufsinformationen hinsichtlich bereitgestellter Sicherheitskonfigurationsprofile (260c) und den Netzwerkumgebungsinformationen (260e) bestimmt wird.

10. Verfahren nach einem der vorhergehenden Ansprüche, wobei die Rückmeldungsinformationen (240) entweder identisch mit oder proportional zu der Risikobewertung selbst sind oder eine binäre Anzeige dessen sind, ob die Risikobewertung niedriger als ein Schwellenwert ist oder nicht.

11. Verfahren nach einem der vorhergehenden Ansprüche, wobei das Berechnen der Risikobewertung und das Erstellen der Rückmeldungsinformationen (240) die Anwendung mindestens eines von einem Algorithmus für maschinelles Lernen, einem Entscheidungsbaumalgorithmus und einem Random-Forest-Algorithmus umfasst, der als Eingabe das Sicherheitskonfigurationsprofil (230a, 230b, 620a, 620c, 620d), die Netzwerkentitätsinformationen (250) und die Bereitstellungsinformationen nimmt und als Ausgabe die Risikobewertung und die Rückmeldungsinformationen (240) erzeugt.

12. Verfahren nach einem der vorhergehenden Ansprüche, wobei die Netzwerkentität (120a:120N) eines von Folgenden ist: eine Netzwerkkomponente, ein Netzwerkknoten, ein Server, eine physische Netzwerkfunktion, PNF, eine virtuelle Netzwerkfunktion, VNF, eine containerisierte Netzwerkfunktion, CNF, eine virtuelle Sicherheitsfunktion, VSF, eine physische Sicherheitsfunktion, PSF, eine Netzwerkeinrichtung, NE, ein Netzwerk-Slice.

13. Sicherheitskonfigurationsentität (200) zum Erstellen eines Sicherheitskonfigurationsprofils (230a, 230b, 620a, 620c, 620d) für eine Netzwerkentität (120a:120N), wobei die Sicherheitskonfigurationsentität (200) Verarbeitungsschaltung (810) umfasst, und die Verarbeitungsschaltungsanordnung so konfiguriert ist, dass sie die Sicherheitskonfigurationsentität (200) veranlasst zum:
Erstellen des Sicherheitskonfigurationsprofils (230a, 230b, 620a, 620c, 620d) für die Netzwerkentität (120a:120N) basierend auf Netzwerkentitätsinformationen (250), Bereitstellungsinformationen und Rückmeldungsinformationen (240) für ein früher erstelltes Sicherheitskonfigurationsprofil (230a, 230b, 620a, 620c, 620d), wobei das Erstellen des Sicherheitskonfigurationsprofils (230a, 230b, 620a, 620c, 620d) die Anwendung mindestens eines von einem Algorithmus für maschinelles Lernen, einem Entscheidungsbaumalgorithmus und einem Random-Forest-Algorithmus umfasst, der als Eingabe die Netzwerkentitätsinformationen (250), die Bereitstellungsinformationen und die Rückmeldungsinformationen (240) nimmt und als Ausgabe das Sicherheitskonfigurationsprofil (230a, 230b, 620a, 620c, 620d) erzeugt;
Bestimmen basierend auf einer Berechnung einer Risikobewertung für das erstellte Sicherheitskonfigurationsprofil (230a, 230b, 620a, 620c, 620d), ob das Sicherheitskonfigurationsprofil (230a, 230b, 620a, 620c, 620d) für die Netzwerkentität (120a:120N) bereitgestellt werden soll oder nicht; und Erstellen von Rückmeldungsinformationen (240) für das Sicherheitskonfigurationsprofil (230a, 230b, 620a, 620c, 620d) basierend auf der Risikobewertung, den Netzwerkentitätsinformationen (250) und den Bereitstellungsinformationen.

14. Sicherheitskonfigurationsentität (200) nach Anspruch 13, das ferner zum Durchführen des Verfahrens nach einem der Ansprüche 2 bis 12 konfiguriert ist.

15. Computerprogramm (1020) zum Erstellen eines Sicherheitskonfigurationsprofils (230a, 230b, 620a, 620c, 620d) für eine Netzwerkentität (120a:120N), wobei das Computerprogramm Computercode umfasst, der bei Ausführung auf Verarbeitungsschaltungsanordnung (810) der Sicherheitskonfigurationsentität (200) die Sicherheitskonfigurationsentität (200) veranlasst zum:
Erstellen (S102) des Sicherheitskonfigurationsprofils (230a, 230b, 620a, 620c, 620d) für die Netzwerkentität (120a:120N) basierend auf Netzwerkentitätsinformationen (250), Bereitstellungsinformationen und Rückmeldungsinformationen (240) für ein früher erstelltes Sicherheitskonfigurationsprofil (230a, 230b, 620a, 620c, 620d), wobei das Erstellen des Sicherheitskonfigurationsprofils (230a, 230b, 620a, 620c, 620d) die Anwendung mindestens eines von einem Algorithmus für maschinelles Lernen, einem Entscheidungsbaumalgorithmus und einem Random-Forest-Algorithmus umfasst, der als Eingabe die Netzwerkentitätsinformationen (250), die Bereitstellungsinformationen und die Rückmeldungsinformationen (240) nimmt und als Ausgabe das Sicherheitskonfigurationsprofil (230a, 230b, 620a, 620c, 620d) erzeugt;
Bestimmen (S104) basierend auf einer Risikobewertung für das erstellte Sicherheitskonfigurationsprofil (230a, 230b, 620a, 620c, 620d), ob das Sicherheitskonfigurationsprofil (230a, 230b, 620a, 620c, 620d) für die Netzwerkentität (120a:120N) bereitgestellt werden soll oder nicht; und
Erstellen (S106) von Rückmeldungsinformationen (240) für das Sicherheitskonfigurationsprofil (230a, 230b, 620a, 620c, 620d) basierend auf der Risikobewertung, den Netzwerkentitätsinformationen (250) und den Bereitstellungsinformationen.

## Revendications

1. Procédé de génération d'un profil de configuration de sécurité (230a, 230b, 620a, 620c, 620d) pour une entité de réseau (120a:120N), le procédé étant réalisé par une entité de configuration de sécurité (200), le procédé comprenant :
la génération (S102) du profil de configuration de sécurité (230a, 230b, 620a, 620c, 620d) pour l'entité de réseau (120a:120N) sur la base d'informations d'entité de réseau (250), d'informations de déploiement et d'informations de rétroaction (240) pour un profil de configuration de sécurité (230a, 230b, 620a, 620c, 620d) précédemment généré, dans lequel la génération du profil de configuration de sécurité (230a, 230b, 620a, 620c, 620d) implique une application d'au moins l'un parmi un algorithme d'apprentissage automatique, un algorithme d'arbre de décision, et un algorithme Random Forest qui prend en tant qu'entrée les informations d'entité de réseau (250), les informations de déploiement et les informations de rétroaction (240) et qui produit en tant que sortie le profil de configuration de sécurité (230a, 230b, 620a, 620c, 620d) ;
la détermination (S104), sur la base du calcul d'un score de risque pour le profil de configuration de sécurité (230a, 230b, 620a, 620c, 620d) généré, si le profil de configuration de sécurité (230a, 230b, 620a, 620c, 620d) doit ou non être fourni à l'entité de réseau (120a:120N) ; et
la génération (S106) d'informations de rétroaction (240) pour le profil de configuration de sécurité (230a, 230b, 620a, 620c, 620d) sur la base du score de risque, des informations d'entité de réseau (250) et des informations de déploiement.

2. Procédé selon la revendication 1, dans lequel ladite génération (S102) du profil de configuration de sécurité (230a, 230b, 620a, 620c, 620d), ladite détermination (S104), et ladite génération (S106) d'informations de rétroaction (240) sont répétées itérativement (S108) jusqu'à ce que le score de risque pour le profil de configuration de sécurité (230a, 230b, 620a, 620c, 620d) soit inférieur à une valeur de seuil.

3. Procédé selon la revendication 1 ou 2, comprenant en outre :
la fourniture (S110) du profil de configuration de sécurité (230a, 230b, 620a, 620c, 620d) à un système d'orchestration de réseau et de service (110) lorsque le score de risque est inférieur à une valeur de seuil.

4. Procédé selon l'une quelconque des revendications précédentes, dans lequel le profil de configuration de sécurité (230a, 230b, 620a, 620c, 620d) est fourni en tant qu'un modèle.

5. Procédé selon l'une quelconque des revendications précédentes, dans lequel les informations d'entité de réseau (250) se rapportent à une configuration de l'entité de réseau (120a:120N).

6. Procédé selon l'une quelconque des revendications précédentes, dans lequel l'entité de réseau (120a:120N) est associée à au moins un service (520a, 520b, 520c), dans lequel les informations d'entité de réseau (250) comportent une première partie qui est transparente à l'au moins un service (520a, 520b, 520c) et une deuxième partie qui est spécifique à chacun de l'au moins un service (520a, 520b, 520c), et dans lequel le profil de configuration de sécurité (230a, 230b, 620a, 620c, 620d) comporte une partie transparente au service (530) correspondante et une partie spécifique au service (540a, 540b, 540c) correspondante qui est spécifique à chacun de l'au moins un service (520a, 520b, 520c).

7. Procédé selon l'une quelconque des revendications précédentes, dans lequel les informations de déploiement se rapportent à l'une quelconque parmi : des informations de configuration de sécurité (260a), des informations d'évaluation de risques de sécurité (260b), des informations historiques de profils de configuration de sécurité déployés (260c), des informations d'environnement de réseau (260e), et des informations de configuration de sécurité spécifiques au service (260f).

8. Procédé selon l'une quelconque des revendications précédentes, dans lequel la génération du profil de configuration de sécurité (230a, 230b, 620a, 620c, 620d) comprend le renseignement d'un profil de modèle selon les informations d'entité de réseau (250) puis le renseignement supplémentaire du profil de modèle selon les informations de déploiement et les informations de rétroaction (240), et dans lequel le profil de configuration de sécurité (230a, 230b, 620a, 620c, 620d) est défini par le profil de modèle ainsi renseigné.

9. Procédé selon l'une quelconque des revendications précédentes, dans lequel le score de risque est calculé sur la base d'une classification du profil de configuration de sécurité (230a, 230b, 620a, 620c, 620d), dans lequel la classification est déterminée par l'évaluation du profil de configuration de sécurité (230a, 230b, 620a, 620c, 620d) en fonction des informations d'évaluation de risques de sécurité (260b), des informations historiques de profils de configuration de sécurité déployés (260c), et des informations d'environnement de réseau (260e).

10. Procédé selon l'une quelconque des revendications précédentes, dans lequel les informations de rétroaction (240) sont identiques ou proportionnelles au score de risque proprement dit ou sont une indication binaire indiquant si le score de risque est ou non inférieur à une valeur de seuil.

11. Procédé selon l'une quelconque des revendications précédentes, dans lequel le calcul du score de risque et la génération des informations de rétroaction (240) impliquent une application d'au moins l'un parmi un algorithme d'apprentissage automatique, un algorithme d'arbre de décision, et un algorithme Random Forest qui prend en tant qu'entrée le profil de configuration de sécurité (230a, 230b, 620a, 620c, 620d), les informations d'entité de réseau (250) et les informations de déploiement et qui produit en tant que sortie le score de risque et les informations de rétroaction (240).

12. Procédé selon l'une quelconque des revendications précédentes, dans lequel l'entité de réseau (120a:120N) est l'un quelconque parmi : un composant de réseau, un nœud de réseau, un serveur, une fonction de réseau physique, PNF, une fonction de réseau virtuelle, VNF, une fonction de réseau conteneurisée, CNF, une fonction de sécurité virtuelle, VSF, une fonction de sécurité physique, PSF, un équipement de réseau, NE, et une tranche de réseau.

13. Entité de configuration de sécurité (200) pour générer un profil de configuration de sécurité (230a, 230b, 620a, 620c, 620d) pour une entité de réseau (120a:120N), l'entité de configuration de sécurité (200) comprenant une circuiterie de traitement (810), la circuiterie de traitement étant configurée pour amener l'entité de configuration de sécurité (200) à :
générer le profil de configuration de sécurité (230a, 230b, 620a, 620c, 620d) pour l'entité de réseau (120a:120N) sur la base d'informations d'entité de réseau (250), d'informations de déploiement et d'informations de rétroaction (240) pour un profil de configuration de sécurité (230a, 230b, 620a, 620c, 620d) précédemment généré, dans lequel la génération du profil de configuration de sécurité (230a, 230b, 620a, 620c, 620d) implique une application d'au moins l'un parmi un algorithme d'apprentissage automatique, un algorithme d'arbre de décision, et un algorithme Random Forest qui prend en tant qu'entrée les informations d'entité de réseau (250), les informations de déploiement et les informations de rétroaction (240) et qui produit en tant que sortie le profil de configuration de sécurité (230a, 230b, 620a, 620c, 620d) ;
déterminer, sur la base du calcul d'un score de risque pour le profil de configuration de sécurité (230a, 230b, 620a, 620c, 620d) généré, si le profil de configuration de sécurité (230a, 230b, 620a, 620c, 620d) doit ou non être fourni à l'entité de réseau (120a:120N) ; et
générer des informations de rétroaction (240) pour le profil de configuration de sécurité (230a, 230b, 620a, 620c, 620d) sur la base du score de risque, des informations d'entité de réseau (250) et des informations de déploiement.

14. Entité de configuration de sécurité (200) selon la revendication 13, étant en outre configurée pour réaliser le procédé selon l'une quelconque des revendications 2 à 12.

15. Programme informatique (1020) pour générer un profil de configuration de sécurité (230a, 230b, 620a, 620c, 620d) pour une entité de réseau (120a:120N), le programme informatique comprenant un code informatique qui, lorsqu'il est exécuté sur une circuiterie de traitement (810) d'une entité de configuration de sécurité (200), amène l'entité de configuration de sécurité (200) à :
générer (S102) le profil de configuration de sécurité (230a, 230b, 620a, 620c, 620d) pour l'entité de réseau (120a:120N) sur la base d'informations d'entité de réseau (250), d'informations de déploiement et d'informations de rétroaction (240) pour un profil de configuration de sécurité (230a, 230b, 620a, 620c, 620d) précédemment généré, dans lequel la génération du profil de configuration de sécurité (230a, 230b, 620a, 620c, 620d) implique une application d'au moins l'un parmi un algorithme d'apprentissage automatique, un algorithme d'arbre de décision, et un algorithme Random Forest qui prend en tant qu'entrée les informations d'entité de réseau (250), les informations de déploiement et les informations de rétroaction (240) et qui produit en tant que sortie le profil de configuration de sécurité (230a, 230b, 620a, 620c, 620d) ;
déterminer (S104), sur la base du calcul d'un score de risque pour le profil de configuration de sécurité (230a, 230b, 620a, 620c, 620d) généré, si le profil de configuration de sécurité (230a, 230b, 620a, 620c, 620d) doit ou non être fourni à l'entité de réseau (120a:120N) ; et
générer (S106) des informations de rétroaction (240) pour le profil de configuration de sécurité (230a, 230b, 620a, 620c, 620d) sur la base du score de risque, des informations d'entité de réseau (250) et des informations de déploiement.
